# EUROPEAN PATENT APPLICATION

(11) **EP 4 671 546 A1**
(43) Date of publication of application: **31.12.2025**
(21) Application number: 24185245.8
(22) Date of filing: 28.06.2024
(51) Int. Cl.: F16B 2/06, F16B 5/06, F16B 3/00

(54) **ROTATABLE JOINT WITH CONTINUOUS INTERFACE**

(71) Applicant: AIRBUS Operations GmbH, 21129 Hamburg (DE)
(72) Inventor: Bruhn, Marvin, Hamburg (DE); Benthien, Hermann, Hamburg (DE)

(57) **Abstract**

The present invention relates to a connection (10) for fastening a building component (12) to a support structure (14).

In order to provide for an improved and more efficient connection between building structures, the connection comprises a supporting portion (16), a locking bracket arrangement (18) and a mounting portion (20). The supporting portion is configured for load transfer to the support structure and the mounting portion is configured for load transfer to the building component. The locking bracket arrangement is configured for connecting the supporting portion and the mounting portion with each other. The supporting portion comprises a supporting surface (22) having a convex contour (24) along at least one curvature direction, the convex contour having at least one axis of curvature (26). The mounting portion comprises a mounting surface (28) for contacting the supporting surface, the mounting surface having a concave contour (30) formed to be matching with the convex contour of the supporting surface to form a connecting interface (32). At least one of the supporting portion and the mounting portion comprises a concentric flange arrangement (34) with a flange surface (36) on a reverse side of the connecting interface. The locking bracket arrangement comprises at least two form-fitting portions (38) engaging the concentric flange arrangement. The form-fitting portions are having a locking surface (40) for abutting the flange surface, the locking surface having a contour (42) matching with the contour (44) of the concentric flange arrangement.

## Description

### FIELD OF THE INVENTION

The present invention relates to a way of joining building components in an aircraft, more specifically the invention relates to a connection, an aircraft and a method for providing the connection.

### BACKGROUND OF THE INVENTION

Components that enable the functioning of a vehicle, like an aircraft, may require a bonding. This bonding may be provided by a riveting and drilling at a bonding site. The components of the aircraft, like for example cabin equipment with respect to a fuselage structure, may come with constructional differences at their joint bonding sites due to their manufacturing. These constructional differences may be compensated by means of the riveting and drilling which however may pose a cumbersome procedure, may be restricted to certain constructional differences only and may result in an unideal load transfer between the components.

### SUMMARY OF THE INVENTION

There may thus be a need for an improved and more efficient connection between building structures.

The object of the present invention is solved by the subject-matter of the independent claims; further embodiments are incorporated in the dependent claims. It should be noted that the following described aspects of the invention apply also for the connection, for the aircraft and for the method for providing the connection.

According to the present invention, a connection for fastening a building component to a support structure is provided. The connection comprises a supporting portion, a locking bracket arrangement, and a mounting portion. The supporting portion is configured for load transfer to the support structure and the mounting portion is configured for load transfer to the building component. The locking bracket arrangement is configured for connecting the supporting portion and the mounting portion with each other. The supporting portion comprises a supporting surface having a convex contour along at least one curvature direction, the convex contour having at least one axis of curvature. The mounting portion comprises a mounting surface for contacting the supporting surface, the mounting surface having a concave contour formed to be matching with the convex contour of the supporting surface to form a connecting interface. At least one of the supporting portion and the mounting portion comprises a concentric flange arrangement with a flange surface on a reverse side of the connecting interface. The locking bracket arrangement comprises at least two form-fitting portions engaging the concentric flange arrangement. The form-fitting portions are having a locking surface for abutting the flange surface, the locking surface having a contour matching with the contour of the concentric flange arrangement.

As an advantage a rotary load introduction, with rotary joints for load introduction without parasitic moments is provided. As an advantage, a load transfer is provided. As an advantage, a rotary joint is with a continuous interface is provided. As an advantage, rotary joint principle and a continuous interface can be combined. As an advantage, interface attachments for primary and secondary structure elements are enabled. As an advantage, a structural interface without drilling, screwing or riveting. As an advantage, the solution works also as a glued solution. As an advantage, no drilling means that the solution is applicable in the final assembly line. As an advantage, no drilling means that the solution is useful for each new installation after refurbishing. As an advantage, the connection is a strong enabler for decoupling and ramp up.

According to an example, the connecting interface is formed to define a virtual pivotal point. The connecting interface provides an adjustment of an angular alignment between the supporting portion and the mounting portion with respect to the virtual pivotal point. The angular alignment orients a longitudinal axis of the mounting portion with respect to a longitudinal axis of the supporting portion.

According to an example, the convex contour is formed in a spherical shape and has two axes of curvature that provide an angular alignment along a spherical range.

According to an example, the least two form-fitting portions engaging the concentric flange arrangement each comprise a web portion and a holding projection at each of the at least two double-bracket sections for abutting against the concentric flange arrangement in the engaging manner. In a mounted state, an alignment space is provided between the web portion and lateral end faces of the concentric flange arrangement of the supporting portion and the mounting portion.

According to an example, the locking bracket arrangement further comprises a fastener element. The fastener element is formed to secure the at least two form-fitting portions against each other at the concentric flange arrangement.

According to an example, the fastener element is provided as a ball-lock pin and the locking bracket arrangement comprises a pin receiving section. The pin receiving section is configured for mounting the locking bracket arrangement with the ball-lock pin to the mounting portion and/or the supporting portion.

According to the present invention, an aircraft is provided. The aircraft comprises a support structure, provided as a fuselage structure enclosing a cabin space, a building component, provided as cabin equipment and a least one connection according to one of the preceding claims, either provided as integral part or as mountable part of the fuselage structure and/or the cabin equipment. The cabin equipment is mounted to the fuselage structure via the at least one connection.

As an advantage, a structural attachment of cabin modules/monuments is provided. As an advantage, a parasitic load introduction to or from cabin modules/monuments is reduced. As an advantage, constructional tolerances to or from cabin modules/monuments can be compensated.

According to the present invention, a method for providing a connection for fastening a building component to a support structure is provided. The method comprises the following steps:
- Providing a supporting portion,
- Providing a locking bracket arrangement, and
- Providing a mounting portion. The supporting portion is configured for load transfer to the support structure and the mounting portion is configured for load transfer to the building component. The locking bracket arrangement is configured for connecting the supporting portion and the mounting portion with each other. The supporting portion comprises a supporting surface having a convex contour along at least one curvature direction, the convex contour having at least one axis of curvature. The mounting portion comprises a mounting surface for contacting the supporting surface, the mounting surface having a concave contour formed to be matching with the convex contour of the supporting surface to form a connecting interface. At least one of the supporting portion and the mounting portion comprises a concentric flange arrangement with a flange surface on a reverse side of the connecting interface. The locking bracket arrangement comprises at least two form-fitting portions engaging the concentric flange arrangement. The form-fitting portions are having a locking surface for abutting the flange surface, the locking surface having a contour matching with the contour of the concentric flange arrangement.

According to an aspect, a rotary joint coupling between a primary structure, like an airframe, subjected to aerodynamic loads and a customized structure, like cabin equipment, is provided. The customized structure may also be provided as a primary structure component. The secondary and primary structure components in an aircraft are mostly connected by riveted connections. The assembly tolerances are compensated by the drilling and riveting of the riveted connections. Yet, this rotary joint creates an interface which is able to compensate for tolerances in multiple directions and also allows attachments without drilling and riveting. The rotary joint creates this interface by two abutting and complementary joint disks that are enclosed by a glove envelope. The glove envelope is locked at the joint disks and provides the load path between the primary and secondary structure.

According to an aspect, a rotatable joint with continuous interface is provided.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the following drawings:
Fig. 1 schematically shows a cross-section through a connecting interface of an example of a connection.
Fig. 2 shows an example of an aircraft comprising the connection.
Fig. 3 shows basic steps of an example of a method for providing the connection.

### DETAILED DESCRIPTION OF EMBODIMENTS

Certain embodiments will now be described in greater details with reference to the accompanying drawings. In the following description, like drawing reference numerals are used for like elements, even in different drawings. The matters defined in the description, such as detailed construction and elements, are provided to assist in a comprehensive understanding of the exemplary embodiments. Also, well-known functions or constructions are not described in detail since they would obscure the embodiments with unnecessary detail. Moreover, expressions such as "at least one of', when preceding a list of elements, modify the entire list of elements and do not modify the individual elements of the list.

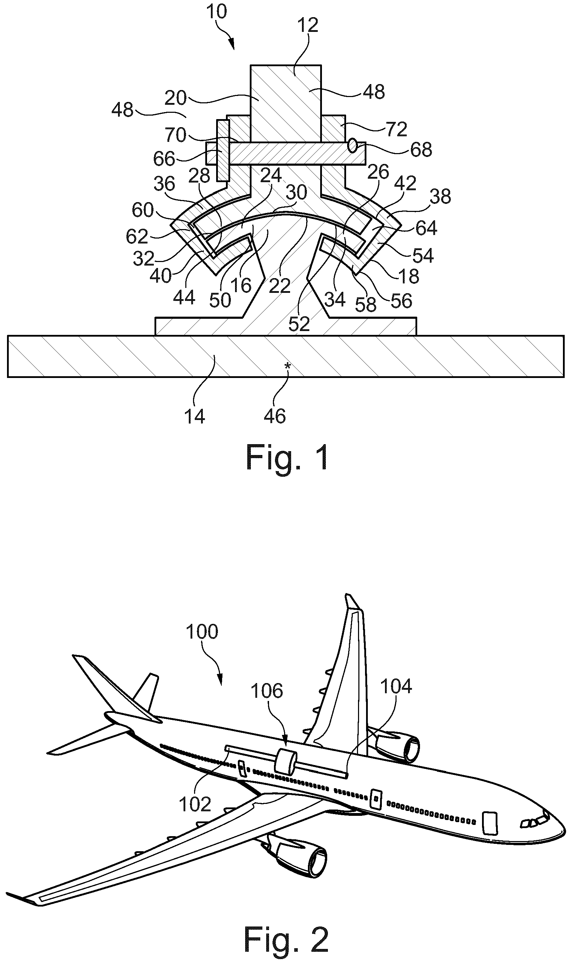

Fig. 1 schematically shows a cross-section through a connecting interface 32 of an example of a connection 10. The connection 10 for fastening a building component 12 to a support structure 14 comprises a supporting portion 16 a locking bracket arrangement 18 and a mounting portion 20. The supporting portion 16 is configured for load transfer to the support structure 14 and the mounting portion 20 is configured for load transfer to the building component 12. The locking bracket arrangement 18 is configured for connecting the supporting portion 16 and the mounting portion 20 with each other. The supporting portion 16 comprises a supporting surface 22 having a convex contour 24 along at least one curvature direction, the convex contour 24 having at least one axis of curvature 26. The mounting portion 20 comprises a mounting surface 28 for contacting the supporting surface 22, the mounting surface 28 having a concave contour 30 formed to be matching with the convex contour 24 of the supporting surface 22 to form a connecting interface 32. At least one of the supporting portion 16 and the mounting portion 20 comprises a concentric flange arrangement 34 with a flange surface 36 on a reverse side of the connecting interface 32. The locking bracket arrangement 18 comprises at least two form-fitting portions 38 engaging the concentric flange arrangement 34. The form-fitting portions are having a locking surface 40 for abutting the flange surface 36, the locking surface 40 having a contour 42 matching with the contour 44 of the concentric flange arrangement 34.

The term "connection" relates to a coupling or a joint between two different obj ects.

In an example, the connection 10 is a reversible coupling that can be remounted several times.

The connection 10 can also be referred to as hinge.

The term "building component" relates to equipment or a framework, or a construction that carries equipment, not shown in Fig. 1.

In an example, the building component 12 can relate to objects that require a mounting to a vehicle structure such as for example the fuselage structure of an aircraft, not shown in Fig. 1.

In an example, the building component 12 is a cabin set-up that is mounted to a fuselage structure of an aircraft, not shown in Fig. 1.

The term "support structure" relates to a structure that is a basis to set up the building component 12.

In an example, the support structure 14 is a vehicle structure, not shown in Fig. 1.

In an example, the support structure 14 is a vehicle frame, not shown in Fig. 1.

In an example, the support structure 14 is a fuselage structure of an aircraft, not shown in Fig. 1.

The term "supporting portion" relates to a section of a support structure 14 that is formed to provide a base interface to a mounting structure.

In an example, the term "is configured for load transfer" means that the connection 10 is:
i) connected to the support structure 14 via a joining part, or
ii) connected to the support structure 14 by being formed integral / one-piece with the support structure 14.

The term "locking bracket arrangement" relates to a mounting, a holder, a clamp, a fixture, a retainer, that is attachable to two different objects to join the two different objects and form a load path between the two different objects.

The term "mounting portion" relates to a section of the building component 12 that provides a joining interface to a support structure 14.

The term "convex contour" relates to the outer profile of a bend surface, where most material of the surface is in the middle of the surface to form a hill. Respectively the term "concave contour" relates to the outer profile of a bend surface, where least material of the surface is in the middle of the surface to form a valley, as shown in Fig. 1.

In an example, the mounting surface 28 has a convex contour 24, and the supporting surface 22 has a concave contour 30, not shown in Fig. 1.

The supporting portion 16 can also be referred to as supporting head.

The mounting portion 20 can also be referred to as mounting foot or mounting cap.

The term "curvature direction" relates to a direct linear path on the surface of a bend shape.

The terms "supporting surface" and "mounting surface" relate to an even terminal face of an object that is formed to accept a face of another object, as shown in Fig. 1.

The term "connecting interface" relates to a transition area between the supporting surface 22 and the mounting surface 28 and a transition area between the supporting portion 16 and the mounting portion 20.

The term "concentric flange arrangement" relates to a projection of material at a connection 10 interface that protrudes in a direction transverse to the connection 10 direction of the connection 10 interface and in plane with the faces of the connection 10 interfaces.

In an example, the concentric flange arrangement 34 is provided as enlarged material diameter at a terminal end of the supporting portion 16 or the mounting portion 20.

In an example, the concentric flange arrangement 34 is a ring-like element that encloses the terminal end faces of the mounting portion 20 and/or the supporting portion.

In an example, the concentric flange arrangement 34 is provided by several protruding elements that are radially arranged at the terminal end faces of the mounting portion 20 and/or the supporting portion, not shown in Fig. 1.

In an example, the concentric flange arrangement 34 is part of the mounting surface 28 and/or the supporting surface 22.

In an example, the concentric flange arrangement 34 comprises a concave contour 30 on one side and a convex contour 24 on the other, reverse side.

In an example, the concentric flange arrangement 34 comprises a concave contour 30 and a convex contour 24 with respect to a longitudinal axis of the supporting portion 16 or the mounting portion 20.

In an example, the concentric flange arrangement 34 comprises a mushroom cap-like cross-section, not shown in Fig. 1.

In an example, a contour of the concentric flange arrangement 34 follows the concave contours 30 or convex contours 24 of the mounting portion 20 and/or the supporting portion 16, as shown in Fig. 1.

The term "flange surface" relates to faces of the concentric flange arrangement 34 that point away from the connecting interface 32 and are at an outside of the connection 10, whereas the connecting interface 32 represents the inside of the connection 10.

The term "reverse side" relates to an area opposite to the mounting surface 28 and the supporting surface 22.

The term "form-fitting portions" relates to recessed sections of the locking bracket arrangement 18, where the shape of the recessed sections is complementary with the shape of the concentric flange arrangement 34, such that the recessed sections can take up the concentric flange arrangement 34, as shown in Fig. 1.

In an example, the recessed sections have a glove-like cross-section with a palm and fingers to reach around the concentric flange arrangement 34, as shown in Fig. 1.

The term "locking surface" relates to an outer face portion of locking bracket arrangement 18 that is formed for attaching to mounting protrusions of a different joining part.

In an example, the connection 10 is configured to isolate the load transfer path in the connection 10 between the mounting portion 20 and the supporting portion 16 from the connection 10 interface such that it takes place via the locking bracket arrangement 18 and the concentric flange arrangement 34, as shown in Fig. 1.

In an example, the connection 10 is configured to hold the mounting portion 20 and the supporting portion 16 together via the locking bracket arrangement 18, while a traction force is acting on either the mounting portion 20 or the supporting portion 16.

In an example, the shape and contour of the locking bracket arrangement 18 is formed to represent the direct load path between the mounting portion 20 and the supporting portion 16.

In an example, the connecting interface 32 is configured to receive an adhesive substance between the supporting surface 22 and the mounting surface 28, not shown in Fig. 1.

In an example, the connecting interface 32 is configured for wet assembly.

In an example, the connection 10 is configured for wet assembly, i.e. assembly under application of layering substances providing corrosion resistance.

In an example, the supporting surface 22 and the mounting surface 28 are closed and solid surfaces, as shown in Fig. 1.

In an example, the supporting portion 16 and the mounting portion 20 are solid and closed structures.

In an example, the supporting portion 16 and the mounting portion 20 comprise a closed surface, as shown in Fig. 1.

In an example, not shown in Fig. 1, a connection 10 for fastening a building component 12 to a support structure 14 is provided, the connection 10 comprises a supporting portion 16 and a locking bracket arrangement 18. The supporting portion 16 is configured for load transfer to the support structure 14. The locking bracket arrangement 18 is configured for connecting the supporting portion 16 to a mounting portion 20. The supporting portion 16 comprises a supporting surface 22 for contacting a mounting surface 28 of the mounting portion 20, having a convex contour 24 along at least one curvature direction, the contour having at least one axis of curvature 26. The supporting portion 16 comprises a concentric flange arrangement 34 with a flange surface 36 on a reverse side of the connecting interface 32. The locking bracket arrangement 18 comprises at least two form-fitting portions 38 engaging the concentric flange arrangement 34. The form-fitting portions are having a locking surface 40 for abutting the flange surface 36, the locking surface 40 having a contour matching with the contour of the concentric flange arrangement 34.

In an example, more than at least two form-fitting portions are provided, like three, four or five form-fitting portions.

In an example, not shown in Fig. 1, a connection 10 for fastening a building component 12 to a support structure 14 is provided, the connection 10 comprises a locking bracket arrangement 18 and a mounting portion 20. The mounting portion 20 is configured for load transfer to the building component 12. The locking bracket arrangement 18 is configured for connecting the mounting portion 20 to the supporting portion 16. The mounting portion 20 comprises a mounting surface 28 for contacting a supporting surface 22 of a supporting portion 16, the mounting surface 28 having a concave contour 30 formed to be matching with the convex contour 24 of the supporting surface 22 to form a connecting interface 32. The mounting portion 20 comprises a concentric flange arrangement 34 with a flange surface 36 on a reverse side of the connecting interface 32. The locking bracket arrangement 18 comprises at least two form-fitting portions 38 engaging the concentric flange arrangement 34. The form-fitting portions are having a locking surface 40 for abutting the flange surface 36, the locking surface 40 having a contour matching with the contour of the concentric flange arrangement 34.

In an example, the at least two form-fitting portions 38 are complementary with each other and are joinable at the concentric flange arrangement 34 to form a single closed surface, not shown in Fig. 1.

In an example, of Fig. 1, the connecting interface 32 is formed to define a virtual pivotal point 46. The connecting interface 32 provides an adjustment of an angular alignment 48 between the supporting portion 16 and the mounting portion 20 with respect to the virtual pivotal point 46. The angular alignment 48 orients a longitudinal axis of the mounting portion 20 with respect to a longitudinal axis of the supporting portion 16.

The term "virtual pivotal point" relates to a leverage point between the mounting portion 20 and the supporting portion 16, while the connection 10 between the mounting portion 20 and the supporting portion 16 represents a hinge or j oint. It refers to the point that is the centre of rotation of the mounting portion 20 or the supporting portion 16 with respect to a fixedly oriented mounting portion 20 or supporting portion 16, as shown in Fig. 1.

In an example, the convex contour 24 of the supporting surface 22 is shaped or formed such that it steers the position of the pivotal point to a predetermined point in space, as shown in Fig. 1.

In an example, the convex contour 24 of the supporting surface 22 is shaped or formed such that it steers the position of the pivotal point to a neutral phase of a building component 12 or a support structure 14, that is not in the direct load path of the supporting portion 16 or the mounting portion 20, not shown in Fig. 1.

The term "angular alignment" relates to an adjustment of an angle that is enclosed by the mounting portion 20 and the supporting portion 16 and located at the connecting interface 32 between both portions. Through sliding the mounting surface 28 at the supporting surface 22 this angle can be rendered from less than 360° to more than 0°.

In an example, angular alignment 48 means that the two parts can be rotated in relation to each other around the connecting interface 32. The movement can also be described as pivoting movement.

The term "a longitudinal axis of the supporting portion" relates to the extension in the longest extension direction of the mounting portion 20 or the supporting portion 16, i.e. that represents the lever arm or leverage of the mounting portion 20 or the supporting portion 16, not shown in Fig. 1.

In an example, the adjustment is provided by the mounting surface 28 being slidable against the supporting surface 22.

In a variation, the adjustment is achieved by providing a relative slidable movement of the supporting portion 16 and the mounting portion 20 before a fixation of the locking bracket arrangement 18. In another variation, the adjustment is achieved by providing a relative slidable movement of the supporting portion 16 and the mounting portion 20 also after a fixation of the locking bracket arrangement 18.

The connecting interface 32 provides an adjustment of an angular alignment 48 between the building component 12 and the support structure 14, as shown in Fig. 1.

As an advantage, the connection 10 provides tolerance compensation between primary and secondary structure. As an advantage, the connection 10 provides tolerance compensation between building component 12 and support structure 14. As an advantage, the connection 10 provides tolerance compensation between mounting portion 20 and supporting portion 16. As an advantage, the connection 10 provides tolerance compensation between mounting surface 28 and supporting surface 22.

In an example, of Fig. 1, the convex contour 24 is formed in a cylindrical shape 50 to have one axis of curvature 26 and to provide the angular alignment 48 along one curvature direction.

The term "cylindrical shape" relates to a columnar or half-columnar cross-section, as shown in Fig. 1.

In an example, the supporting contour, i.e. convex contour 24, is provided along at least one curvature direction and has at least one axis of curvature 26, as shown in Fig. 1.

In an example, the concave contour 30 is formed to be matching with the convex contour 24 for a planar contacting of the two surfaces, not shown in Fig. 1.

In an example, abutting can also be referred to as contacting, resting, areal contact.

In an example, the supporting portion 16 comprises a concentric flange arrangement 34 in the curvature direction, the concentric flange arrangement 34 forming a reverse side being concentric with the convex contour 24.

In an example, the contour with at least one axis of curvature 26 can also be referred to as a cylindric contour or cylindric shape.

As an advantage, the use of extruded aluminum profiles that comprise the cylindrical shape has many advantages as they are cheap to produce. As an advantage, installation of hatracks is enabled in only one translatory axis, x-direction and no y-movement is needed for the assembly. As an advantage, a cheap and light jig design is possible.

In an example, of Fig. 1, the convex contour 24 is formed in a spherical shape 52 and has two axes of curvature that provide an angular alignment 48 along a spherical range.

In an example, more than two axes of curvature are provided, like three, four or five axes of curvature.

The term "spherical shape" relates to the cross-section through any plane of a ball.

In an example, the spherical shape 52 is a cone-like shape, not shown in Fig. 1.

In an example, a spherical shape 52 or sphere can be divided in latitudes and longitudes. The spherical shape 52 associated, i.e. with the supporting portion 16, allows a placement of the respective mounting portion 20 at a predetermined latitude and longitude, when the locking bracket arrangement 18 is not applied in an engaging manner that fixates the mounting portion 20 to the engaging portion. This results in a certain angular alignment 48, i.e. angular setting between supporting portion 16 and mounting portion 20, not shown in Fig. 1.

The contour with two axes of curvature can also be referred to as a spheric contour or spheric shape. As an advantage, the rotary interface enables tolerance compensation in x, y and z direction.

In an example, of Fig. 1, both of the supporting portion 16 and the mounting portion 20 comprise the concentric flange arrangement 34 with flange surfaces 36 on the respective reverse sides of the connecting interface 32. The locking bracket arrangement 18 comprises at least two double-bracket sections 54 engaging the flange surfaces 36 on both reverse sides of the connecting interface 32.

In an example, more than at least two double-bracket sections 54 are provided, like three, four or five double-bracket sections.

In an example, not shown in Fig. 1, only the supporting portion 16 comprises the concentric flange arrangement 34 at its end. For this case, a locking bracket arrangement 18 is provided that is integrally formed with the mounting portion 20 or is fastened at the outer surface of the mounting portion 20. The concentric flange arrangement 34 of the supporting portion 16 is then brought into contact with a terminal contact surface of the mounting portion 20. The supporting portion 16 and the mounting portion 20 are brought into their destined angular alignment 48. Afterwards the locking bracket arrangement 18 of the mounting portion 20 is engaged with the concentric flange arrangement 34 of the supporting portion 16.

In another example, not shown in Fig. 1, only the mounting portion 20 comprises the concentric flange arrangement 34 at its end. For this case, a locking bracket arrangement 18 is provided that is integrally formed with the supporting portion 16 or is fastened at the outer surface of the supporting portion 16. The concentric flange arrangement 34 of the mounting portion 20 is then brought into contact with a terminal contact surface of the supporting portion 16. The mounting portion 20 and the supporting portion 16 are brought into their destined angular alignment 48. Afterwards the locking bracket arrangement 18 of the supporting portion 16 is engaged with the concentric flange arrangement 34 of the mounting portion 20.

In another example, as shown in Fig. 1, both the supporting portion 16 and the mounting portion 20 comprise a concentric flange arrangement 34. For this case, a locking bracket arrangement 18 is provided that has at least two double-bracket sections 54. One section of the at least two double-bracket sections 54 engage with the concentric flange arrangement 34 at the supporting portion 16 and the other section of the at least two double-bracket sections 54 engage with the concentric flange arrangement 34 at the mounting portion 20. The at least two double-bracket sections 54 are provided at each one of the least two form-fitting portions 38. The at least two double-bracket sections 54 are mirrored at an axis of the locking bracket arrangement 18 that follows the connecting interface 32 between the mounting portion 20 and the supporting portion 16. A plane defined by the connecting interface 32 intersects the locking bracket arrangement 18 traverse its longitudinal extension in direction of the supporting portion 16 or the mounting portion 20. Here, the at least two double-bracket sections 54 hold the concentric flange arrangements 34 of the supporting portion 16 and the mounting portion 20 together.

As an advantage, a wet assembly as an enabler for fine adjustment as well as form fit tolerance compensation with a gap closure can be provided. As an advantage, direct load paths with no parasitic moments are provided. As an advantage, the wet assembly eliminates the risk of corrosion.

In an example, of Fig. 1, the at least two form-fitting portions 38 of the locking bracket are shaped to generate a pressing force when being engaged with the concentric flange arrangement 34. The pressing force urges the mounting surface 28 against the supporting surface 22. The pressing force is provided to fixate an angular alignment 48 between the mounting portion 20 and the supporting portion 16 at a predetermined curvature coordinate.

The term "pressing force" relates to an occurrence of counteracting forces between the mounting portion 20 and the supporting portion 16 at the connecting interface 32 directed to the connecting interface 32. The pressing or pressure force generates an increased friction between the mounting surface 28 and the supporting surface 22, such that they cannot slide against each other and the angle between the mounting portion 20 and the supporting portion 16 is kept at a predetermined value, as shown in Fig. 1.

In an example, the pressing force is generated between a slight mismatch of the contour of the locking surface 40 and the contour of the concentric flange arrangement 34, not shown in Fig. 1.

As an advantage, corrosion protection and damping behavior can be provided.

In an example, of Fig. 1, the least two form-fitting portions 38 engaging the concentric flange arrangement 34 each comprise a web portion 56 and a holding projection 58 at each of the at least two double-bracket sections 54 for abutting against the concentric flange arrangement 34 in the engaging manner. In a mounted state, an alignment space 60 is provided between the web portion 56 and lateral end faces 62 of the concentric flange arrangement 34 of the supporting portion 16 and the mounting portion 20.

The term "web portion" relates to a central gird part of the body of the locking bracket arrangement 18, as shown in Fig. 1.

The term "holding projection" relates to cantilevering protrusions that originate at a same side at the central gird part of the body in a predefined distance from each other, as shown in Fig. 1.

In an example, there are different ways of providing the angular alignment 48 between the mounting portion 20 and the supporting portion 16. The connection 10 is configured such that the angular alignment 48 between the mounting portion 20 and the supporting portion 16 can be set without the locking bracket arrangement 18 and then for fixating the angular alignment 48 the locking bracket arrangement 18 is engaged with the concentric flange arrangement 34. The connection 10 is also configured such that the angular alignment 48 can be set with the locking bracket arrangement 18 not fully engaged and that the fully engaged locking bracket arrangement 18 fixes the angular alignment 48.

The term "alignment space" relates to a game between the contour of the locking surface 40 matching with the contour of the concentric flange arrangement 34, such that the form-fitting engagement between the locking surface 40 and the flange surface 36 of the concentric flange arrangement 34 allows for an adjustment of different angular alignments 48 between the mounting portion 20 and the supporting portion 16, as shown in Fig. 1.

In an example, the holding projection 58 is also formed in a bend shape and conforms with the convex and concave contour 30 of the concentric flange arrangement 34.

In an example, the holding projection 58 has a convex and concave contour 30, as shown in Fig. 1.

In an example, a cross-section of the holding projection 58 has a glove-like shape. The glove-like shape encompasses the concentric flange arrangement 34, as shown in Fig. 1.

In an example, the web portion 56 and the holding projection 58 are shaped in a bend form towards the virtual pivotal point 46, as shown in Fig. 1.

In an example, the concentric flange arrangement 34 comprises a square profile at a cross-section of a flange edge portion that is delimited by the flange surface 36 and the lateral end faces 62, not shown in Fig. 1.

In an example, the concentric flange arrangement 34 comprises a triangular profile at a cross-section of a flange edge portion that is delimited by the flange surface 36 and the lateral end faces 62, not shown in Fig. 1.

In an example, the concentric flange arrangement 34 comprises a round profile at a cross-section of a flange edge portion that is delimited by the flange surface 36 and the lateral end faces 62, as shown in Fig. 1.

In an example, the alignment tolerance space is provided at the flange surface 36 at flange faces reverse to and/or lateral to the supporting surface 22 and/or the mounting surface 28, as shown in Fig. 1.

As an advantage, the gloves can be assembled without tooling.

In an example, of Fig. 1, either the mounting surface 28 or the supporting surface 22 has as smaller area than the respective mounting surface 28 or supporting surface 22 at the connecting interface 32 to provide additional space 64 to the alignment space 60.

In an example, as shown in Fig. 1, the mounting surface 28 or the supporting surface 22 with their respective concentric flange arrangement 34 are smaller than the contacting mounting surface 28 or supporting surface 22 such that there is a game between the respective concentric flange arrangement 34 and the web portion 56 of the locking bracket arrangement 18. This game allows a setting to different angular alignments 48, while still allowing the engagement between the concentric flange arrangement 34 and the locking surface 40 of the locking bracket arrangement 18 to fixate the different angular alignments 48. As an advantage, the additional space 64 is protected from debris and unwanted contamination. As an advantage, the additional space 64 comprises a reservoir for corrosion resistant substances.

In an example, of Fig. 1, the locking bracket arrangement 18 further comprises a fastener element 66. The fastener element 66 is formed to secure the at least two form-fitting portions 38 against each other at the concentric flange arrangement 34.

In an example, the fastener element 66 is provided at the locking bracket arrangement 18 and the supporting or mounting portion 20, as shown in Fig. 1.

In an example, the fastener element 66 is provided at the locking bracket arrangement 18 only, not shown in Fig. 1.

In an example, the fastener element 66 is a clamp-like element that encloses the at least two form-fitting portions 38 engaging the concentric flange arrangement 34.

In an example, the fastener element 66 is configured to allow an accelerated mounting. As an advantage, no drilling needs to be provided, as the at least two form-fitting portions 38 are secured against each other.

In an example, of Fig. 1, the fastener element 66 is provided as a ball-lock pin 68 and the locking bracket arrangement 18 comprises a pin receiving section 70. The pin receiving section 70 is configured for mounting the locking bracket arrangement 18 with the ball-lock pin 68 to the mounting portion 20 and/or the supporting portion 16.

In an example, the pin receiving section 70 is configured to direct the ball-lock pin 68 through a through hole at the locking bracket arrangement 18 coinciding with at through hole at the supporting portion 16 or the mounting portion 20.

In an example, the pin receiving section 70 is configured to direct the ball-lock pin 68 through a through hole at the locking bracket arrangement 18 and another through hole at the locking bracket arrangement 18 to press the at least two form-fitting portions 38 against the concentric flange arrangement 34, as shown in Fig. 1.

In an example, the pin receiving section 70 is configured to isolate the load path between the mounting portion 20 and the supporting portion 16 from the ball-lock pin 68 by directing the load path via the least two form-fitting portions 38 of the locking bracket arrangement 18 between the mounting portion 20 and the supporting portion 16, their concentric flange arrangement 34 respectively, as shown in Fig. 1.

As an advantage, a snap and click interface junction for primary structure truss works is provided. As an advantage, a ball lock pin secures the connection 10 without drilling and riveting. As an advantage, the ball lock pin is a worldwide standard according snap and click attachment and can easily replaced by a blind rivet or comparable solution.

In an example, of Fig. 1, the locking bracket arrangement 18 further comprises a collar section 72. The collar section 72 is formed to support the mounting portion 20 and/or the supporting portion 16 via the at least two form-fitting portions 38 engaged with the concentric flange arrangement 34.

In an example, the collar section 72 comprises the pin receiving section 70, as shown in Fig. 1.

In an example, the collar section 72 is formed and provided at the locking bracket arrangement 18 such that it supports the supporting portion 16 or the mounting portion 20 in a distance to the connecting interface 32, as shown in Fig. 1.

In an example, the collar section 72 rests on the concentric flange arrangement 34, as shown in Fig. 1.

The term "collar" relates to a pillar like element that is able to transfer load from the mounting portion 20 or the supporting portion 16 through the at least two form-fitting portions 38 to the respective mounting portion 20 or the supporting portion 16, as shown in Fig. 1.

In an example, at least two curved form-fitting portions comprise a concave contour 30 or convex contour 24 and the collar is a straight structure resting on the at least two form-fitting portions 38. The collar is arranged to focus load from the supporting portion 16 via the at least two curved form-fitting portions on a predefined virtual pivotal point 46 in space.

In an example, the virtual pivotal point 46 in space resides in the neutral phase of a building structure. As an advantage, the direct load path between mounting portion 20 and supporting portion 16 is greatly improved.

In an example, not shown in Fig. 1, the supporting surface 22 and/or the mounting surface 28 are provided as a longitudinal extending rail to provide a translation of the mounting portion 20 and the supporting portion 16 with respect to each other in a transverse direction to the axis of curvature 26. The locking bracket arrangement 18 is configured to provide an additional fixation in the transverse direction.

In an example, the supporting contour is provided along at least one curvature direction and has at least one axis of curvature 26.

As an advantage a continuous rail interface is provided. As an advantage, the rotary joint is not limited to pre-defined interface points which does allow an application with rail interfaces. As an advantage, a continuous interface is created which uses the advantages of the rotary joint and the flexibility of a rail interface. As an advantage, the sliding interface of cabin modules, for example hatracks, enables fast installation time.

In an example, not shown in Fig. 1, the mounting surface 28 and the supporting surface 22 comprise arresting elements that are formed complementary with each other to lock the mounting portion 20 at the supporting portion 16 at a predetermined angular alignment 48.

In an example, the mounting surface 28 or the supporting surface 22 comprise at least one donating recess that is filled with a spring-loaded locking bar, the corresponding mounting surface 28 or supporting surface 22 comprise at least one accepting recesses. When donating and accepting recess coincide, the spring-loaded locking bar will lock the angular alignment 48 of the supporting portion 16 and the mounting portion 20. As an advantage, the fixation of the angular alignment 48 of the mounting portion 20 and the supporting portion 16 is improved.

Fig. 2 shows an example of an aircraft 100 comprising the connection 10. The aircraft 100 comprises a support structure 102, provided as a fuselage structure enclosing a cabin space, a building component 104, provided as cabin equipment and a least one connection 106 according to one of the preceding claims, either provided as integral part or as mountable part of the fuselage structure and/or the cabin equipment. The cabin equipment is mounted to the fuselage structure via the at least one connection 10.

In an example, the at least one connection 10 is established during wet assembly, when the support structure 14 and the building component 12 are joined.

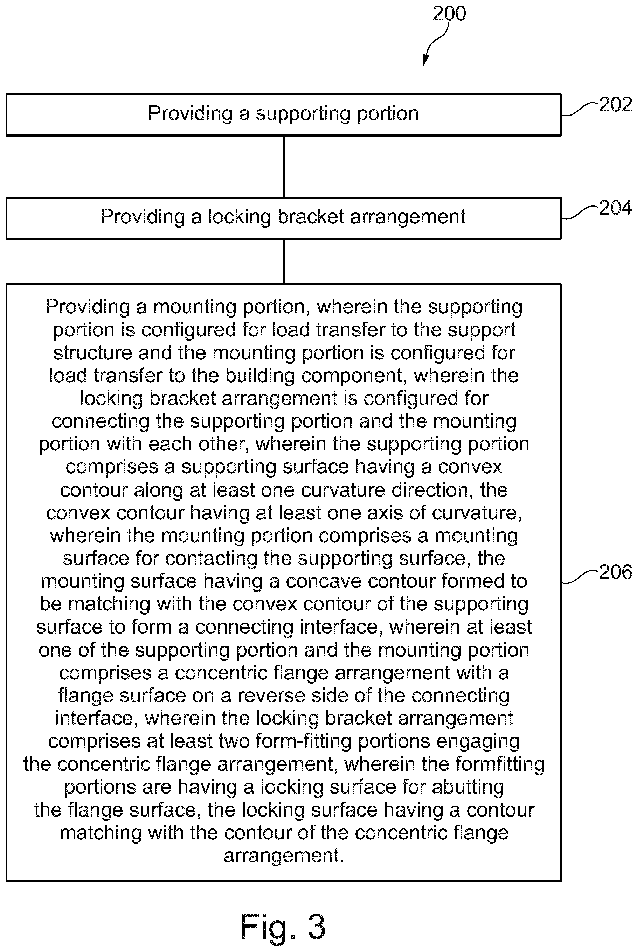

Fig. 3 shows basic steps of an example of a method 200 for providing the connection 10. The method 200 for providing a connection 10 for fastening a building component 12 to a support structure 14, the method comprises the following steps with reference to Fig. 1:
- In a first step 202 a supporting portion 16 is provided.
- In a second step 204 a locking bracket arrangement 18 is provided.
- In a third step 206 a mounting portion 20 is provided. The supporting portion 16 is configured for load transfer to the support structure 14 and the mounting portion 20 is configured for load transfer to the building component 12. The locking bracket arrangement 18 is configured for connecting the supporting portion 16 and the mounting portion 20 with each other. The supporting portion 16 comprises a supporting surface 22 having a convex contour 24 along at least one curvature direction, the convex contour 24 having at least one axis of curvature 26. The mounting portion 20 comprises a mounting surface 28 for contacting the supporting surface 22, the mounting surface 28 having a concave contour 30 formed to be matching with the convex contour 24 of the supporting surface 22 to form a connecting interface 32. At least one of the supporting portion 16 and the mounting portion 20 comprises a concentric flange arrangement 34 with a flange surface 36 on a reverse side of the connecting interface 32. The locking bracket arrangement 18 comprises at least two form-fitting portions 38 engaging the concentric flange arrangement 34. The form-fitting portions are having a locking surface 40 for abutting the flange surface 36, the locking surface 40 having a contour matching with the contour of the concentric flange arrangement 34.

In an example, a method is provided for wet assembly of the connection 10, that comprises the steps of covering the components of the connection 10 with a corrosion-resistance providing liquid and then assembling the connection 10, while a corrosion-resistance providing liquid is still in the liquid phase.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A connection (10) for fastening a building component (12) to a support structure (14), the connection comprising:
- a supporting portion (16);
- a locking bracket arrangement (18); and
- a mounting portion (20);
wherein the supporting portion is configured for load transfer to the support structure and the mounting portion is configured for load transfer to the building component;
wherein the locking bracket arrangement is configured for connecting the supporting portion and the mounting portion with each other;
wherein the supporting portion comprises a supporting surface (22) having a convex contour (24) along at least one curvature direction, the convex contour having at least one axis of curvature (26);
wherein the mounting portion comprises a mounting surface (28) for contacting the supporting surface, the mounting surface having a concave contour (30) formed to be matching with the convex contour of the supporting surface to form a connecting interface (32);
wherein at least one of the supporting portion and the mounting portion comprises a concentric flange arrangement (34) with a flange surface (36) on a reverse side of the connecting interface; and
wherein the locking bracket arrangement comprises at least two form-fitting portions (38) engaging the concentric flange arrangement, wherein the form-fitting portions are having a locking surface (40) for abutting the flange surface, the locking surface having a contour (42) matching with the contour (44) of the concentric flange arrangement.

2. Connection according to claim 1, wherein the connecting interface is formed to define a virtual pivotal point (46); and
wherein the connecting interface provides an adjustment of an angular alignment (48) between the supporting portion and the mounting portion with respect to the virtual pivotal point, wherein the angular alignment orients a longitudinal axis of the mounting portion with respect to a longitudinal axis of the supporting portion.

3. Connection according to claim 1 or 2, wherein the convex contour is formed in a cylindrical shape (50) to have one axis of curvature and to provide the angular alignment along one curvature direction.

4. Connection according to claim 1, 2 or 3, wherein the convex contour is formed in a spherical shape (52) and has two axes of curvature that provide an angular alignment along a spherical range.

5. Connection according to one of the preceding claims, wherein both of the supporting portion and the mounting portion comprise the concentric flange arrangement with flange surfaces on the respective reverse sides of the connecting interface; and
wherein the locking bracket arrangement comprises at least two double-bracket sections (54) engaging the flange surfaces on both reverse sides of the connecting interface.

6. Connection according to one of the preceding claims, wherein the at least two form-fitting portions of the locking bracket are shaped to generate a pressing force when being engaged with the concentric flange arrangement, wherein the pressing force urges the mounting surface against the supporting surface; and
wherein the pressing force is provided to fixate an angular alignment between the mounting portion and the supporting portion at a predetermined curvature coordinate.

7. Connection according to one of the preceding claims, wherein the least two form-fitting portions engaging the concentric flange arrangement each comprise a web portion (56) and a holding projection (58) at each of the at least two double-bracket sections for abutting against the concentric flange arrangement in the engaging manner; and
wherein, in a mounted state, an alignment space (60) is provided between the web portion and lateral end faces (62) of the concentric flange arrangement of the supporting portion and the mounting portion.

8. Connection according to one of the preceding claims, wherein either the mounting surface or the supporting surface has as smaller area than the respective mounting surface or supporting surface at the connecting interface to provide additional space (64) to the alignment space.

9. Connection according to one of the preceding claims, wherein the locking bracket arrangement further comprises a fastener element (66); and
wherein the fastener element is formed to secure the at least two form-fitting portions against each other at the concentric flange arrangement.

10. Connection according to claim 9, wherein the fastener element is provided as a ball-lock pin (68) and the locking bracket arrangement comprises a pin receiving section (70); and
wherein the pin receiving section is configured for mounting the locking bracket arrangement with the ball-lock pin to the mounting portion and/or the supporting portion.

11. Connection according to one of the preceding claims, wherein the locking bracket arrangement further comprises a collar section (72); and
wherein the collar section is formed to support the mounting portion and/or the supporting portion via the at least two form-fitting portions engaged with the concentric flange arrangement.

12. Connection according to one of the preceding claims, wherein the supporting surface and/or the mounting surface are provided as a longitudinal extending rail to provide a translation of the mounting portion and the supporting portion with respect to each other in a transverse direction to the axis of curvature; and
wherein the locking bracket arrangement is configured to provide an additional fixation in the transverse direction.

13. Connection according to one of the preceding claims, wherein the mounting surface and the supporting surface comprise arresting elements that are formed complementary with each other to lock the mounting portion at the supporting portion at a predetermined angular alignment.

14. An aircraft (100) comprising:
- a support structure (102), provided as a fuselage structure enclosing a cabin space;
- a building component (104), provided as cabin equipment; and
- a least one connection (106) according to one of the preceding claims, either provided as integral part or as mountable part of the fuselage structure and/or the cabin equipment;
wherein the cabin equipment is mounted to the fuselage structure via the at least one connection.

15. A method (200) for providing a connection for fastening a building component to a support structure, the method comprising the following steps:
- Providing (202) a supporting portion;
- Providing (204) a locking bracket arrangement; and
- Providing (206) a mounting portion, wherein the supporting portion is configured for load transfer to the support structure and the mounting portion is configured for load transfer to the building component, wherein the locking bracket arrangement is configured for connecting the supporting portion and the mounting portion with each other, wherein the supporting portion comprises a supporting surface having a convex contour along at least one curvature direction, the convex contour having at least one axis of curvature, wherein the mounting portion comprises a mounting surface for contacting the supporting surface, the mounting surface having a concave contour formed to be matching with the convex contour of the supporting surface to form a connecting interface, wherein at least one of the supporting portion and the mounting portion comprises a concentric flange arrangement with a flange surface on a reverse side of the connecting interface, wherein the locking bracket arrangement comprises at least two form-fitting portions engaging the concentric flange arrangement, wherein the form-fitting portions are having a locking surface for abutting the flange surface, the locking surface having a contour matching with the contour of the concentric flange arrangement.
